(19) Europäisches Patentamt
European Patent Office
Office européen des brevets

(11) **EP 2 886 971 B1**

(12) **FASCICULE DE BREVET EUROPEEN**

(45) Date de publication et mention
de la délivrance du brevet:
**28.08.2019 Bulletin 2019/35**

(51) Int Cl.:
*F24H 9/20* (2006.01)  *F24D 19/10* (2006.01)
*F28D 20/00* (2006.01)  *G05D 23/19* (2006.01)

(21) Numéro de dépôt: **14199509.2**

(22) Date de dépôt: **19.12.2014**

(54) **Système de chauffe-eau à capacité énergétique modulable**

Warmwasserheizsystem mit modulierbarer Energiekapazität

Water heating system with scalable energy capability

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2013 FR 1363229**

(43) Date de publication de la demande:
**24.06.2015 Bulletin 2015/26**

(73) Titulaire: **Electricité de France**
**75008 Paris (FR)**

(72) Inventeurs:
• **COINCE, Anne-Sophie**
  **77210 AVON (FR)**
• **HALLEUR, Lionel**
  **77670 SAINT MAMMES (FR)**

(74) Mandataire: **Regimbeau**
**20, rue de Chazelles**
**75847 Paris Cedex 17 (FR)**

(56) Documents cités:
**EP-A2- 2 610 999     FR-A1- 2 741 704
US-A1- 2013 205 814**

## Description

DOMAINE TECHNIQUE GENERAL

La présente invention concerne un système de type chauffe-eau à capacité énergétique modulable.

ETAT DE L'ART

Le « mix énergétique » désigne la répartition des différentes sources consommées pour la production d'énergie électrique. Ce mix énergétique, en constante évolution, voit la progression constante des Energies Renouvelables, ce qui entraîne un besoin accru en flexibilités du système.

Ces dernières, représentées essentiellement par l'éolien et le photovoltaïque, ne permettent en effet pas une production constante et régulée au contraire d'une centrale nucléaire, d'où des problèmes de variabilité et de prévisibilité de la production associée. Cela fait que les aléas de très court terme vont fortement augmenter.

D'autre part, des problèmes locaux de qualité de fourniture électrique vont être amplifiés du fait d'une répartition géographique inhomogène des installations, avec par exemple plutôt du photovoltaïque dans le Sud et de l'éolien dans le Nord.

Il apparait essentiel de trouver des solutions de pilotage de la charge associée en vue de maitriser l'aléa lié aux Energies Renouvelables.

Il a par exemple été proposé la charge de batteries stationnaires pour faciliter l'insertion massive de panneaux photovoltaïques (démonstrateur « NiceGrid »). Toutefois, les coûts d'investissement élevés ne permettent pas d'envisager un déploiement à grande échelle de cette solution alternative. Il est également prévu d'agir sur la puissance réactive fournie par les panneaux photovoltaïque pour ajuster la tension. Cependant, cette dernière piste ne répond pas aux enjeux de maîtrise de l'aléa éolien.

Alternativement au stockage via batteries, il est possible de stocker l'énergie thermiquement. Avec près de 12 millions d'unités installées en France dont plus de 80% sont asservies au signal tarifaire Heures Pleines/Heures creuses (HP/HC), le parc de Chauffe-Eau Joule (CEJ) à accumulation résidentiel - utilisé aujourd'hui pour le lissage journalier de la courbe de charge - est susceptible de répondre à ces nouveaux enjeux.

Les demande de brevet US 2009/0188486 ou US 2013/205814 proposent à ce titre des chauffe-eau alimentés en courant continu par des modules photovoltaïques. Le système est configuré pour maximiser la fraction solaire, c'est-à-dire minimiser la consommation d'électricité soutirée du réseau tout en maintenant le confort pour l'utilisateur.

Ce système apporte satisfaction, mais ne résout que partiellement le problème : il peut tout à fait y avoir un jour avec un excédent d'énergie électrique issu du panneau photovoltaïque, et le jour suivant avec un temps couvert rendant nécessaire la consommation d'une autre source d'électricité. De plus le système est complexe et n'est utilisable que dans des habitations équipées d'un panneau solaire.

Il serait souhaitable de disposer d'une manière d'utiliser la capacité de stockage des chauffe-eau joule qui permette plus efficacement de réguler l'énergie électrique d'origine renouvelable qui soit plus efficace, plus intelligente, et adaptable à n'importe quel chauffe-eau existant sans modifications lourdes, et sans couplage direct.

PRESENTATION DE L'INVENTION

L'invention propose de pallier ces inconvénients en proposant selon un premier aspect un système comprenant :

- un réservoir d'eau ;
- un dispositif de chauffage de l'eau du réservoir, le dispositif comprenant un moyen de chauffage alimenté par un réseau électrique ;
- une sonde de température configurée pour émettre un signal représentatif de la température de l'eau du réservoir ;
- un module de contrôle dudit dispositif de chauffage contrôlé en fonction dudit signal émis par la sonde ;

le système étant caractérisé en ce qu'il comprend en outre un élément de leurre disposé entre la sonde et le module de contrôle configuré pour modifier le signal émis par la sonde de sorte à modifier une capacité énergétique du réservoir d'eau, en fonction de données descriptives d'un état dudit réseau électrique, caractéristiques d'un déficit et/ou d'une surabondance, actuel(le) et/ou futur(e), d'énergie d'origine renouvelable au sein dudit réseau électrique.

Le dispositif selon l'invention est avantageusement complété par les caractéristiques suivantes, prises seules ou en une quelconque de leur combinaison techniquement possible :

- le système comprend en outre un boitier recevant lesdites données descriptives d'un état du réseau électrique depuis un réseau de communication, le boitier étant connecté audit élément de leurre ou au module de contrôle ;

- le module de contrôle est configuré pour activer le dispositif de chauffage lorsque le signal reçu est représentatif d'une température inférieure à un premier seuil prédéfini ;
- l'élément de leurre est configuré pour que le signal reçu par le module de contrôle soit représentatif d'une température plus élevée que la température réelle de l'eau du réservoir, lorsque les données descriptives d'un état dudit réseau électrique sont caractéristiques d'un déficit actuel et/ou d'une surabondance future d'énergie d'origine renouvelable au sein dudit réseau électrique, de sorte à diminuer la capacité énergétique du réservoir d'eau ;
- le module de contrôle est configuré pour désactiver le dispositif de chauffage lorsque le signal reçu est représentatif d'une température supérieure à un deuxième seuil prédéfini ;
- l'élément de leurre est configuré pour que le signal reçu par le module de contrôle soit représentatif d'une température plus basse que la température réelle de l'eau du réservoir, lorsque les données descriptives d'un état dudit réseau électrique sont caractéristiques d'une surabondance actuelle et/ou d'un déficit futur d'énergie d'origine renouvelable au sein dudit réseau électrique, de sorte à augmenter la capacité énergétique du réservoir d'eau ;
- la sonde comprend une thermistance, le signal représentatif de la température de l'eau du réservoir étant la tension aux bornes de la thermistance ;
- l'élément de leurre comprend au moins une résistance et au moins un interrupteur ;
- une première résistance est montée en série avec la thermistance, un premier interrupteur étant monté en parallèle de la première résistance ;
- une deuxième résistance et un deuxième interrupteur sont montés en série sur une branche montée en parallèle de la thermistance ;
- ladite branche est montée en parallèle de l'ensemble comprenant les thermistance, première résistance, et premier interrupteur ;
- l'élément de leurre est configuré pour un fonctionnement normal en fermant le premier interrupteur et en ouvrant le deuxième interrupteur, configuré pour que le signal reçu par le module de contrôle soit représentatif d'une température plus basse que la température réelle de l'eau du réservoir en ouvrant le premier interrupteur et en ouvrant le deuxième interrupteur, et configuré pour que le signal reçu par le module de contrôle soit représentatif d'une température plus élevée que la température réelle de l'eau du réservoir en fermant le premier interrupteur et en fermant le deuxième interrupteur ;
- la première résistance a une valeur inférieure à 1k$\Omega$, et la deuxième résistance a une valeur supérieure à 5k$\Omega$ ;
- l'élément de leurre comprend un module de traitement de données configuré pour recevoir le signal émis par la sonde et générer à destination du module de contrôle un signal représentatif d'une température différente de la température réelle de l'eau du réservoir en fonction desdites données descriptives d'un état dudit réseau électrique ;
- le moyen de chauffage alimenté par le réseau électrique du dispositif de chauffage est une résistance, le système étant un chauffe-eau joule ;
- le moyen de chauffage alimenté par le réseau électrique du dispositif de chauffage est une pompe à chaleur dont la source chaude est en échange thermique avec l'eau du réservoir.

Selon un deuxième aspect, l'invention concerne un procédé de modification de la capacité énergétique d'un réservoir d'eau, le procédé étant caractérisé en ce qu'il comprend des étapes de :

- réception de données descriptives d'un état d'un réseau électrique caractéristiques d'un déficit et/ou d'une surabondance, actuel(le) et/ou futur(e), d'énergie d'origine renouvelable au sein dudit réseau électrique ;
- génération par une sonde de température d'un signal représentatif de la température de l'eau du réservoir ;
- émission dudit signal par la sonde de température à destination d'un module de contrôle d'un dispositif de chauffage de l'eau du réservoir, le dispositif de chauffage comprenant un moyen de chauffage alimenté par le réseau électrique ;
- interception et modification par un élément de leurre disposé entre la sonde et le module de contrôle dudit signal en fonction desdites données descriptives d'un état du réseau électrique ;
- contrôle du dispositif de chauffage par le module de contrôle en fonction dudit signal modifié.

Selon des caractéristiques avantageuses :

- les données descriptives d'un état dudit réseau électrique sont caractéristiques d'un déficit actuel et/ou d'une surabondance future d'énergie d'origine renouvelable au sein dudit réseau électrique, ledit signal étant modifié par l'élément de leurre pour être représentatif d'une température plus élevée que la température réelle de l'eau du réservoir, de sorte à diminuer la capacité énergétique du réservoir ;
- les données descriptives d'un état dudit réseau électrique sont caractéristiques d'une surabondance actuelle et/ou d'un déficit futur d'énergie d'origine renouvelable au sein dudit réseau électrique, ledit signal étant modifié par l'élément de leurre pour être représentatif d'une température plus faible que la température réelle de l'eau du réservoir, de sorte à augmenter la capacité énergétique du réservoir.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 est un schéma d'un mode de réalisation préféré du système selon l'invention ;
- la figure 2 est un diagramme représentant la caractérisation de la thermistance d'une sonde d'un système selon l'invention ;
- la figure 3 est un schéma d'un mode de réalisation d'un élément de leurre d'un système selon l'invention.

Sur les différentes figures, les éléments similaires portent les mêmes références numériques, et les valeurs de températures indiquées sont uniquement à titre d'exemple non limitatif.

DESCRIPTION DETAILLEE

*Architecture générale*

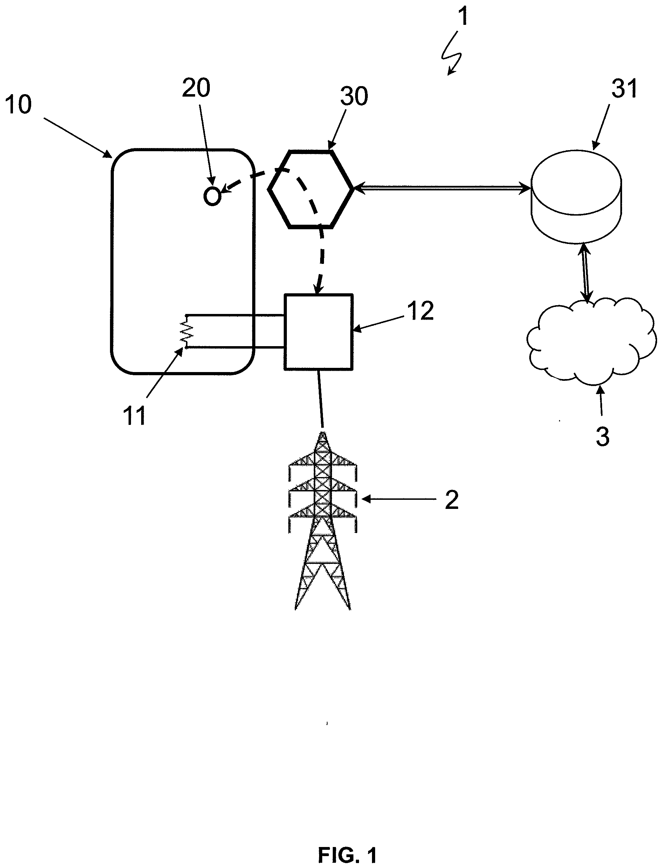

La **figure 1** représente l'architecture générale d'un mode de réalisation préféré du système 1 selon l'invention. Ce système est typiquement un Chauffe-Eau Joule (CEJ) domestique, bien que l'invention ne soit pas limitée à ces derniers. 44% des habitats en sont équipés.

Le système 1 comprend ainsi :

- un réservoir d'eau 10 (communément appelé « ballon » d'eau chaude);
- un dispositif de chauffage 11 de l'eau du réservoir 10, le dispositif 11 comprenant un moyen de chauffage alimenté par un réseau électrique 2 ;
- une sonde de température 20 configurée pour émettre un signal représentatif de la température de l'eau du réservoir 10 ;
- un module de contrôle 12 dudit dispositif de chauffage 11 en fonction dudit signal émis par la sonde 20.

Le moyen de chauffage électrique du dispositif de chauffage est généralement une résistance, d'où le chauffage de l'eau par effet joule. Alternativement, il peut s'agir par exemple d'une pompe à chaleur complète dont la source chaude est en échange thermique avec l'eau du réservoir 10 (et la source froide en échange thermique par exemple avec l'air extérieur), de sorte à permettre un chauffage de l'eau avec une efficacité supérieure à 100%.

De façon préférée, le dispositif 11 est intégralement électrique (il ne comprend ainsi que des moyens de chauffage alimentés par le réseau 2, et pas de bruleurs à gaz par exemple). L'énergie de chauffage fournie à l'eau est alors entièrement d'origine électrique. Le système n'est toutefois pas limité à cette configuration et le dispositif 11 peut alternativement comprendre en outre un moyen de chauffage alternatif (non-électrique) tel qu'un bruleur, un échangeur avec un collecteur solaire, etc.

Le réseau 2 est un réseau à grande échelle qui relie une pluralité de sources électriques. Comme expliqué précédemment, il s'agit à la fois d'énergie d'origine non-renouvelable (nucléaire et/ou fossile) et d'origine renouvelable (solaire, éolien, etc.). L'énergie d'origine renouvelable présente des problèmes de variabilité et de prévisibilité, alors que l'énergie d'origine non-renouvelable est d'une meilleure disponibilité.

Dans l'hypothèse où l'utilisateur du système 1 comprend une source personnelle d'énergie renouvelable (par exemple des panneaux photovoltaïques de toit) on comprend que le réseau 2 englobe à la fois le réseau électrique global et le réseau électrique local de l'utilisateur (en d'autres termes que les centrales distantes et les panneaux solaires locaux peuvent aussi bien l'un que l'autre alimenter le dispositif de chauffage 11).

Le système 1 est régulé en température. Pour cela il comprend une ou plusieurs sondes de température 20 (qui seront décrites plus en détail plus loin) et un module de contrôle 12 du dispositif de chauffage 11. La ou les sondes 20 envoient en permanence ou par intermittence un signal représentatif de la température de l'eau du réservoir 10. Ce signal peut être un envoi de données représentant numériquement la température, ou comme on verra plus loin un signal électrique dont un paramètre est fonction de la température.

Le module de contrôle 12 est typiquement une carte électronique qui déclenche ou non le chauffage en fonction de la température de l'eau et de nombreux autres paramètres éventuels (programmation, saison, plages horaires, heures creuses/heures pleines, usages habituels de l'utilisateur, etc.).

De façon générale un chauffe-eau Joule comprend le plus souvent deux températures de seuil (dont la valeur peut varier selon le moment et des réglages personnels) : une première température de seuil qui est la température « minimale » et une deuxième température de seuil qui est la température « maximale » (le premier seuil est inférieur au deuxième seuil). Ces deux seuils sont quelques degrés autour (par exemple +/- 4°C) d'une température de « confort » qui est la température moyenne souhaitée, réglée par l'utilisateur (l'intervalle 50-65°C est courant).

Le module de contrôle 12 est ainsi configuré pour activer le dispositif de chauffage 11 lorsque le signal reçu est représentatif d'une température inférieure au premier seuil prédéfini, et/ou configuré pour désactiver le dispositif de chauffage 11 lorsque le signal reçu est représentatif d'une température supérieure au deuxième seuil prédéfini.

Ainsi, tant que le dispositif de chauffage 11 est arrêté et que l'on est entre les deux seuils rien ne se passe. Si la température baisse (avec le temps ou parce que l'utilisateur tire de l'eau chaude) et passe en dessous du premier seuil, le dispositif de chauffage 11 est activé, et ce jusqu'à atteindre le deuxième seuil (température maximale, supérieure au premier seuil). La température se remet ensuite à baisser, etc. En d'autres termes il y a une alternance de phases de « refroidissement » pendant lesquelles la température descend du deuxième seuil au premier seuil (voir au-delà si l'utilisateur continue d'utiliser de l'eau chaude), et de phases de « chauffe » pendant lesquelles la température monte sous l'effet du dispositif 10 allumé d'une température inférieure ou égale au premier seuil jusqu'au deuxième seuil.

Comme expliqué avant, cette configuration peut dépendre d'autres paramètres, et il peut y avoir plus de deux seuils, éventuellement mobiles, par exemple de façon à optimiser la consommation d'énergie pendant les heures creuses (les chauffe-eaux sont souvent prévus pour remonter l'eau en température préférentiellement au petit matin, de sorte à maximiser l'utilisation des heures creuses et avoir de l'eau chaude en quantité au moment de se doucher).

En pratique, les premier et deuxième seuils sont souvent la conséquence d'un phénomène d'hystérésis autour d'une valeur médiane, qui définit ces deux seuils. L'écart induit est alors d'environ 3°C.

La présente invention n'est limitée à aucune configuration en particulier, en on comprendra que de façon générale le module de contrôle 12 régule la température du réservoir 10 via l'activation/désactivation du dispositif de chauffage 11 en fonction de la température de l'eau du réservoir 10 représentée par le signal issu de la sonde 20.

*Mécanisme de leurre*

Le système 1 se distingue en ce qu'il comprend en outre un élément de leurre 30 disposé entre la sonde 20 et le module de contrôle 12. Cet élément de leurre est configuré pour modifier le signal émis par la sonde 20 de sorte à modifier une capacité énergétique du réservoir d'eau 10, en fonction de données descriptives d'un état dudit réseau électrique 2.

En d'autres termes, l'élément de leurre 30 fausse volontairement les mesures de température de la sonde 20, de sorte à duper le module de contrôle 12 et altérer la régulation de la température du réservoir 10. Le signal est en fait intercepté par l'élément de leurre 30, modifié et renvoyé au module de contrôle 12. Ce dernier le traite comme étant un signal authentique issu de la sonde 20.

Par exemple, pendant une phase de chauffe de l'eau (et donc de remontée en température du réservoir 10), l'élément de leurre peut modifier le signal envoyé par la sonde 20 de sorte à faire croire au module de contrôle 12 que l'eau est moins chaude qu'elle ne l'est réellement. Cela permet ainsi de dépasser le deuxième seuil de température. Ainsi, davantage d'électricité est consommée, cette électricité étant stockée sous forme de capacité calorifique de l'eau ($4185 \ J.kg^{-1}.K^{-1}$).

Par capacité énergétique du réservoir 10, on entend en effet la quantité maximale d'énergie stockable sous forme thermique via l'eau chaude.

Le mécanisme de leurre permet ainsi d'utiliser les chauffe-eau installés pour gérer la production électrique d'origine renouvelable, et ce facilement et efficacement : la modification des valeurs de température des sondes 20 permet en effet d'augmenter ou de diminuer sur commande la consommation de ces chauffe-eau et de jouer sur l'énergie stockée en tant qu'eau chaude. La capacité énergétique devient modulable. Plusieurs TWh sont ainsi disponibles à l'échelle du territoire français par exemple.

Ceci permet par exemple de privilégier la consommation électrique tant que le photovoltaïque est largement disponible, et de limiter la consommation électrique ou se rabattre sur d'autres énergie (par exemple via des moyens de chauffage alternatifs tels des bruleurs si le dispositif 11 en comprend).

De plus, l'élément de leurre 30 s'intègre entre la sonde 20 et le module de contrôle 12 d'un CEJ existant, et ne nécessite pas de modification structurelle. En particulier, il n'y a aucune modification du module de contrôle 12, qui est incapable de distinguer les signaux authentiques des signaux altérés par l'élément 30. Il est ainsi facile et peu coûteux de modifier les équipements existants. Dans le cas de chauffe-eau neufs, l'élément de leurre 30 peut être directement intégré au module de contrôle 12 comme une fonction supplémentaire afin d'éliminer la nécessité de boitier supplémentaire. Son effet est alors vu comme une correction des valeurs de température entrantes.

Le pilotage de l'élément de leurre 30 est réalisé en fonction de données descriptives d'un état dudit réseau électrique 2. Ces données désignent de façon générale toutes les informations sur la charge du réseau 2, le taux d'énergie d'origine renouvelable, les prévisions de variation de ce taux, de la production/consommation en général, etc.

Ces données peuvent être des données génériques obtenues localement, par exemple d'origine météorologique, qui peuvent indiquer dans quelle mesure les moyens de production d'énergie renouvelable vont être productifs, mais de façon préférée il s'agit de données plus complexes fournies depuis un réseau de communication 3 (typiquement le réseau internet) via un boitier 31, en particulier en temps réel.

Dans un premier mode de réalisation, le boitier 31 est un compteur électrique intelligent (par exemple LINKY) disposant d'un émetteur Télé-Information Client (TIC) intégré ou non. Les données utilisés peuvent notamment être les champs de la TIC tels que par exemple: l'état binaire d'un ou plusieurs contact(s) virtuel(s), l'index tarifaire de la grille fournisseur et/ou distributeur en cours, le prix de l'électricité, le préavis de pointe mobile et/ou une ou plusieurs pointe(s) mobile(s), etc.

Dans un deuxième mode de réalisation, le boitier 31 est un équipement d'accès à internet de type « box » d'un fournisseur d'accès à Internet. Le boitier 31 est connecté à l'élément de leurre 30 par des moyens de connexion réseau tels que le Wi-Fi, une liaison Ethernet, le CPL, etc. les données peuvent être alors des données météorologiques complètes (vitesse du vent, ensoleillement, etc.), des données pré-traitées sur des serveurs d'un fournisseur d'électricité pour optimiser la charge globale, etc.

La présente invention n'est ni limitée à un type de données descriptives d'un état dudit réseau électrique 2, ni une manière de fournir ces données.

*Modes surchauffe et sous-chauffe*

Selon un mode de réalisation préféré, l'élément de leurre 30 met en oeuvre un premier et/ou un deuxième type de fonctionnement.

Le premier est le mode « surchauffe » utilisé pour augmenter la consommation du CEJ et donc la quantité d'énergie stockée. Dans ce mode, l'élément de leurre 30 est configuré pour que le signal reçu par le module de contrôle 12 soit représentatif d'une température plus basse que la température réelle de l'eau du réservoir 10, lorsque les données descriptives d'un état dudit réseau électrique 2 sont caractéristiques d'une surabondance actuelle et/ou d'un déficit futur d'énergie d'origine renouvelable au sein dudit réseau électrique (en d'autres termes si la production d'origine renouvelable est à la baisse à court terme), de sorte à augmenter la capacité énergétique du réservoir d'eau 10.

Ce mode surchauffe est intéressant soit pour absorber une forte production de photovoltaïque, soit une prévision de faible production. Grâce à la surchauffe, le deuxième seuil de température est franchi et de l'eau à 5, voire 15°C au-delà de la température de confort est stockée. Cela augmente donc la consommation immédiate, mais limite la consommation à venir (puisque plus d'énergie est stockée, le prochain franchissement du premier seuil de température est retardé).

Il est à noter que ce mode surchauffe peut être complété de certaines options : si les données déclenchant la surchauffe sont fournies par un compteur équipé d'un module TIC, ce dernier peut augmenter temporairement et simultanément à l'enclenchement du chauffe-eau la valeur de la puissance de coupure pour éviter tout risque de disjonction en absence de délesteur ou de gestionnaire d'énergie. De plus, si le système de chauffage de l'eau est asservi au signal tarifaire via un contact sec ou virtuel, ce dernier devra être piloté de manière à permettre l'alimentation électrique de ce système en dehors des plages normales autorisées si nécessaire. En outre, si les points de soutirage d'eau chaude sanitaire (douche, robinets, etc.) en aval ne sont pas tous équipés de mitigeur, l'ajout d'une vanne de mélange en sortie du réservoir 10 permet d'éviter les risques de brûlure dus à la fourniture d'eau plus chaude.

Le deuxième mode est le mode « sous-chauffe » utilisé pour diminuer la consommation du CEJ et donc la quantité d'énergie stockée. Dans ce mode, l'élément de leurre 30 est configuré pour que le signal reçu par le module de contrôle 12 soit représentatif d'une température plus élevée que la température réelle de l'eau du réservoir 10, lorsque les données descriptives d'un état dudit réseau électrique 2 sont caractéristiques d'un déficit actuel et/ou d'une surabondance future d'énergie d'origine renouvelable au sein dudit réseau électrique 2 (en d'autres termes si la production d'origine renouvelable est à la hausse à court terme), de sorte à diminuer la capacité énergétique du réservoir d'eau 10.

Au contraire du mode surchauffe, ce mode fait croire au module de contrôle 12 que le réservoir 10 contient de l'eau encore chaude de sorte à retarder la consommation électrique. Cela peut être très utile en prévision d'un pic de production d'origine renouvelable. On évite ainsi de consommer de l'énergie fossile alors que l'on sait que l'énergie renouvelable sera bientôt trop abondante.

Il est à noter que les deux modes peuvent cohabiter et être mis en oeuvre à tour de rôle.

*Fonctionnement de l'élément de leurre*

L'élément de leurre 30 peut comprendre un module de traitement de données (un processeur) configuré pour recevoir le signal émis par la sonde 20 et générer à destination du module de contrôle 12 un signal représentatif d'une température différente de la température réelle de l'eau du réservoir 10 en fonction desdites données descriptives d'un état dudit réseau électrique 2. Si le module de contrôle 12 est une carte électronique évoluée comprenant déjà un processeur, l'élément de leurre 30 peut être un module logiciel directement mis en oeuvre par le module de contrôle 12. L'invention n'est en effet pas limitée à un élément de leurre 30 physique.

Mais alternativement, d'autres architectures simples et moins chères qu'un processeur sont possibles, en particulier si la sonde 20 comprend une thermistance.

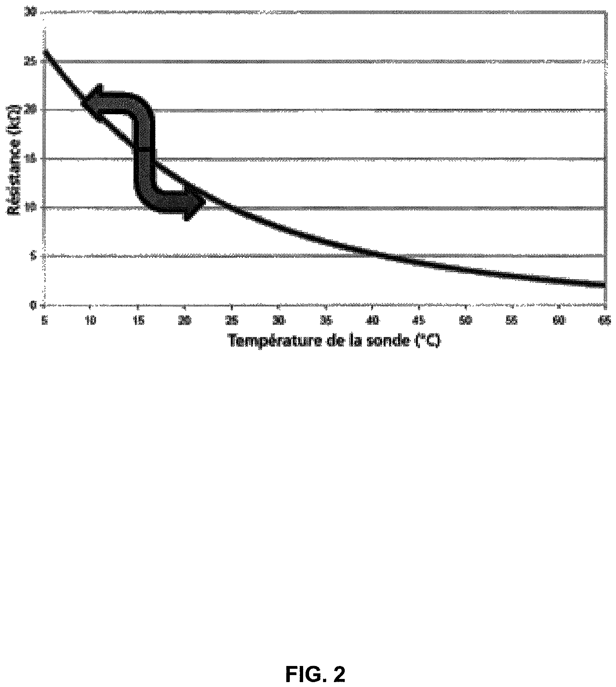

En référence à la **figure 2,** une thermistance (ou thermo-résistance) est une résistance dont la valeur est fonction de la température : comme l'on voit dans l'exemple représenté, la résistance en kΩ de la thermistance diminue lorsque la température augmente.

Ainsi, pour un modèle donné de thermistance, la connaissance de la résistance permet par inversion de la courbe de connaître la température. Le signal représentatif de la température de l'eau du réservoir 10 est ainsi la tension aux bornes de la thermistance (puisque U=RI).

Pour une telle sonde 20, l'élément de leurre 30 est ainsi un organe électrique permettant sur commande de modifier la tension mesurée aux bornes de la thermistance.

Pour augmenter la consigne de température (mode surchauffe, flèche vers la gauche sur le diagramme de la figure 2), il suffit de leurrer à la hausse la résistance de la thermistance grâce à l'ajout d'une résistance en série. La résistance équivalente sera donc supérieure à la résistance réelle, faisant ainsi croire au régulateur que la température d'eau est plus faible qu'en réalité.

Au contraire pour diminuer la consigne (mode sous-chauffe, flèche vers la droite sur le diagramme de la figure 2), une résistance supplémentaire doit être placée en parallèle. La résistance équivalente (l'inverse de la somme des inverse des résistances) sera alors inférieure à la résistance réelle, faisant croire au régulateur que la température est plus élevée qu'elle ne l'est réellement.

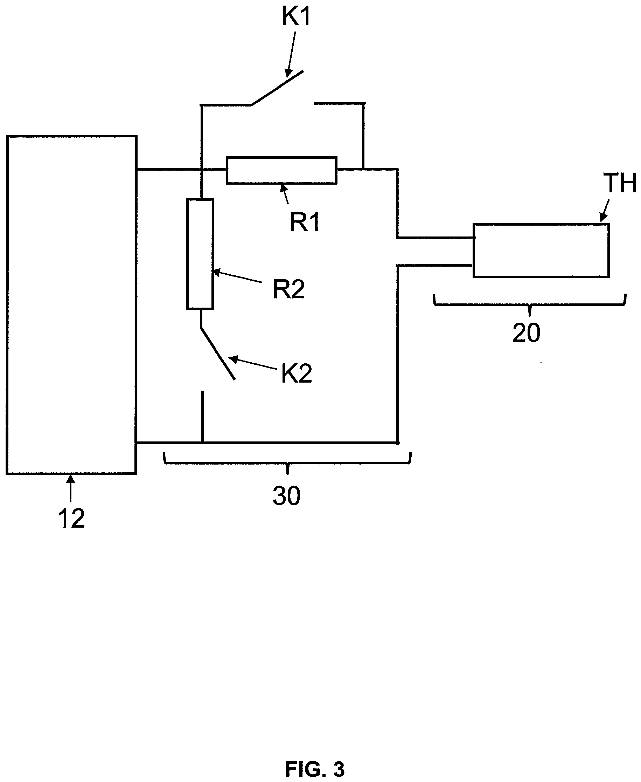

Ainsi, l'élément de leurre 30 comprend au moins une résistance R1, R2 et au moins un interrupteur K1, K2. La **figure 3** représente un mode de réalisation avantageux d'un tel élément de leurre 30 permettant à la fois la surchauffe et la sous-chauffe.

Une première résistance R1 est montée en série avec la thermistance TH, un premier interrupteur K1 étant monté en parallèle de la première résistance R1. Une deuxième résistance R2 et un deuxième interrupteur K2 sont montés en série sur une branche montée en parallèle de l'ensemble constitué des thermistance TH, première résistance R1, et premier interrupteur K1. L'élément de leurre 30 se manipule en ouvrant/fermant les interrupteurs K1 et K2 par exemple via des actionneurs.

Ainsi, l'élément de leurre 30 est :

- configuré pour un fonctionnement normal en fermant le premier interrupteur K1 et en ouvrant le deuxième interrupteur K2 (la résistance R1 est court-circuitée et la branche parallèle non alimentée : $R_{équi} = R_{TH}$) ; et/ou
- configuré pour que le signal reçu par le module de contrôle 12 soit représentatif d'une température plus basse que la température réelle de l'eau du réservoir 10 (mode surchauffe) en ouvrant le premier interrupteur K1 et en ouvrant le deuxième interrupteur K2 (le courant passe dans la résistance R1 : $R_{équi} = R_{TH} + R1 > R_{TH}$) ; et/ou
- configuré pour que le signal reçu par le module de contrôle 12 soit représentatif d'une température plus élevée que la température réelle de l'eau du réservoir 10 (mode sous-chauffe) en fermant le premier interrupteur K1 et en fermant le deuxième interrupteur K2 (la résistance R1 est court-circuitée mais le courant circule dans la résistance R2 : $R_{équi} = \frac{R_{TH}*R2}{R_{TH}+R2} = R_{TH} - \frac{R_{TH}^2}{R_{équi}\ R_{TH}+R2} < R_{TH})$.

La table de vérité ci-dessous illustre ce fonctionnement. Il est à noter que la configuration dans laquelle on ouvre le premier interrupteur K1 et on ferme le deuxième interrupteur K2 n'est pas mise en oeuvre (dans une telle configuration, le courant passe à la fois dans les deux résistances R1 et R2, d'où virtuellement à la fois une surchauffe et une sous-chauffe).

Table de vérité

| Type d'action | | K2 | |
|---|---|---|---|
| | | ouvert | fermé |
| **K1** | ouvert | **Sur-chauffe** | Ø |
| | fermé | fonctionnement normal | **Sous-chauffe** |

Les valeurs des résistances dépendent des caractéristiques de la sonde de température 20 et des sur- et sous-chauffe souhaitées. Pour les matériels et les niveaux de température classiques, il apparait souhaitable que la première résistance R1 présente une valeur inférieure à 1kΩ, et la deuxième résistance R2 une valeur supérieure à 5kΩ. De façon particulièrement préférée, la première résistance R1 présente une valeur de 570Ω, et la deuxième résistance R2 une valeur de 12kΩ.

On note qu'il possible d'ajouter d'autres résistances et d'autres interrupteurs (sur des branches en parallèles les unes des autres), de façon à permettre plusieurs niveaux de surchauffe et/ou de sous-chauffe, par exemple une sous-chauffe à -5°C, et deux surchauffes à +5°C et +10°C

*Tests*

L'élément de leurre 30 à résistances a été testé en conditions réelles par la Demanderesse.

Pour ces valeurs, on obtient en surchauffe une montée de 53.4°C à 66.7°C, soit pour un réservoir 10 de 200L une augmentation garantie d'énergie stockée d'environ 3kWh. Avec un dispositif de chauffage d'une puissance de 2.2kW, cela entraîne une augmentation de la durée de fonctionnement de 1h15.

*Modification d'un chauffe-eau existant*

L' élément de leurre 30 peut être adapté pour un chauffe-eau existant.

Comme expliqué, l'élément de leurre peut s'intégrer entre la sonde 20 et le module de contrôle 12 du CEJ existant sans modifications substantielles. En particulier, il n'est pas nécessaire de reprogrammer le module de contrôle 12 : celui-ci se fait juste leurrer et a l'impression de fonctionner normalement alors que les températures qui lui sont communiquées sont fausses.

L'élément de leurre est ainsi configuré pour modifier le signal émis par la sonde 20 à destination du module de contrôle 12 de sorte à modifier une capacité énergétique du réservoir d'eau 10, en fonction de données descriptives d'un état dudit réseau électrique 2.

Procédé

Selon un deuxième aspect, l'invention concerne également des procédés de modification de la capacité énergétique d'un réservoir d'eau 10 mis en oeuvre par l'installation 1 selon le premier aspect de l'invention. Ces procédés comprennent des étapes de :

- réception de données descriptives d'un état d'un réseau électrique 2 (comme expliqué par exemple depuis un boitier 31) ;
- génération par une sonde de température 20 d'un signal représentatif de la température de l'eau du réservoir 10 (cette génération peut être une simple modification de la tension aux bornes de la sonde 20) ;
- émission dudit signal par la sonde de température 20 à destination d'un module de contrôle 12 d'un dispositif de chauffage 11 de l'eau du réservoir 10, le dispositif de chauffage 11 comprenant un moyen de chauffage alimenté par le réseau électrique 2 ;
- interception et modification par un élément de leurre 30 disposé entre la sonde 20 et le module de contrôle 12 dudit signal en fonction desdites données descriptives d'un état du réseau électrique 2 (on comprend que le signal original ne parvient pas au module de contrôle 12) ;
- contrôle du dispositif de chauffage 11 par le module de contrôle 12 en fonction dudit signal modifié (en d'autres termes, la température de l'eau du réservoir 10 est régulée par le module de contrôle 12 en fonction des données faussées qui lui sont transmises, d'où la capacité énergétique modulable).

Selon le premier mode de fonctionnement décrit précédemment, le système 1 est en mode « surchauffe ». Ce mode est déclenché lorsque les données descriptives d'un état dudit réseau électrique 2 sont caractéristiques d'une surabondance actuelle et/ou d'un déficit futur d'énergie d'origine renouvelable au sein dudit réseau électrique 2.

Le signal est alors modifié par l'élément de leurre 30 pour être représentatif d'une température plus faible que la température réelle de l'eau du réservoir 10, de sorte à augmenter la capacité énergétique du réservoir 10.

Selon le deuxième mode de fonctionnement décrit précédemment, le système 1 est en mode « sous-chauffe ». Ce mode est déclenché lorsque les données descriptives d'un état dudit réseau électrique 2 sont caractéristiques d'un déficit actuel et/ou d'une surabondance future d'énergie d'origine renouvelable au sein dudit réseau électrique 2.

Le signal est alors modifié par l'élément de leurre 30 pour être représentatif d'une température plus élevée que la température réelle de l'eau du réservoir 10, de sorte à diminuer la capacité énergétique du réservoir 10.

**Revendications**

**1.** Système (1) comprenant :

- un réservoir d'eau (10) ;
- un dispositif de chauffage (11) de l'eau du réservoir (10), le dispositif (11) comprenant un moyen de chauffage alimenté par un réseau électrique (2) ;
- une sonde de température (20) configurée pour émettre un signal représentatif de la température de l'eau du réservoir (10) ;
- un module de contrôle (12) dudit dispositif de chauffage (11) contrôlé en fonction dudit signal émis par la sonde (20) ;

le système étant **caractérisé en ce qu'**il comprend en outre un élément de leurre (30) disposé entre la sonde (20) et le module de contrôle (12) configuré pour modifier le signal émis par la sonde (20) de sorte à modifier une capacité énergétique du réservoir d'eau (10), en fonction de données descriptives d'un état dudit réseau électrique (2) caractéristiques d'un déficit et/ou d'une surabondance, actuel(le) et/ou futur(e), d'énergie d'origine renouvelable au sein dudit réseau électrique (2).

2. Système selon la revendication 1, comprenant en outre un boitier (31) recevant lesdites données descriptives d'un état du réseau électrique (2) depuis un réseau de communication (3), le boitier (31) étant connecté audit élément de leurre (30) ou au module de contrôle (12).

3. Système selon l'une des revendications précédentes, dans lequel le module de contrôle (12) est configuré pour activer le dispositif de chauffage (11) lorsque le signal reçu est représentatif d'une température inférieure à un premier seuil prédéfini.

4. Système selon la revendications 3, dans lequel l'élément de leurre (30) est configuré pour que le signal reçu par le module de contrôle (12) soit représentatif d'une température plus élevée que la température réelle de l'eau du réservoir (10), lorsque les données descriptives d'un état dudit réseau électrique (2) sont caractéristiques d'un déficit actuel et/ou d'une surabondance future d'énergie d'origine renouvelable au sein dudit réseau électrique (2), de sorte à diminuer la capacité énergétique du réservoir d'eau (10).

5. Système selon l'une des revendications précédentes, dans lequel le module de contrôle (12) est configuré pour désactiver le dispositif de chauffage (11) lorsque le signal reçu est représentatif d'une température supérieure à un deuxième seuil prédéfini.

6. Système selon la revendication 5, dans lequel l'élément de leurre (30) est configuré pour que le signal reçu par le module de contrôle (12) soit représentatif d'une température plus basse que la température réelle de l'eau du réservoir (10), lorsque les données descriptives d'un état dudit réseau électrique (2) sont caractéristiques d'une surabondance actuelle et/ou d'un déficit futur d'énergie d'origine renouvelable au sein dudit réseau électrique (2), de sorte à augmenter la capacité énergétique du réservoir d'eau (10).

7. Système selon l'une des revendications précédentes, dans lequel la sonde (20) comprend une thermistance (TH), le signal représentatif de la température de l'eau du réservoir (10) étant la tension aux bornes de la thermistance.

8. Système selon la revendication 7, dans lequel l'élément de leurre (30) comprend au moins une résistance (R1, R2) et au moins un interrupteur (K1, K2).

9. Système selon la revendication 8, dans lequel une première résistance (R1) est montée en série avec la thermistance (TH), un premier interrupteur (K1) étant monté en parallèle de la première résistance (R1).

10. Système selon l'une des revendications 8 et 9, dans lequel une deuxième résistance (R2) et un deuxième interrupteur (K2) sont montés en série sur une branche montée en parallèle de la thermistance (TH).

11. Système selon les revendications 9 et 10 en combinaison, dans lequel ladite branche est montée en parallèle de l'ensemble comprenant les thermistances (TH), première résistance (R1), et premier interrupteur (K1).

12. Système selon les revendications 11, 4 et 6 en combinaison, dans lequel l'élément de leurre (30) est configuré pour un fonctionnement normal en fermant le premier interrupteur (K1) et en ouvrant le deuxième interrupteur (K2), configuré pour que le signal reçu par le module de contrôle (12) soit représentatif d'une température plus basse que la température réelle de l'eau du réservoir (10) en ouvrant le premier interrupteur (K1) et en ouvrant le deuxième interrupteur (K2), et configuré pour que le signal reçu par le module de contrôle (12) soit représentatif d'une température plus élevée que la température réelle de l'eau du réservoir (10) en fermant le premier interrupteur (K1) et en fermant le deuxième interrupteur (K2).

13. Système selon l'une des revendications 11 et 12, dans lequel la première résistance (R1) a une valeur inférieure à 1kΩ, et la deuxième résistance (R2) a une valeur supérieure à 5kΩ.

14. Système selon l'une des revendications 1 à 7, dans lequel l'élément de leurre (30) comprend un module de traitement de données configuré pour recevoir le signal émis par la sonde (20) et générer à destination du module de contrôle (12) un signal représentatif d'une température différente de la température réelle de l'eau du réservoir (10) en fonction desdites données descriptives d'un état dudit réseau électrique (2).

15. Système selon l'une des revendications précédentes, dans lequel le moyen de chauffage alimenté par le réseau électrique (2) du dispositif de chauffage (11) est une résistance (R), le système (1) étant un chauffe-eau joule.

16. Système selon l'une des revendications 1 à 14, dans lequel le moyen de chauffage alimenté par le réseau électrique (2) du dispositif de chauffage (11) est une pompe à chaleur dont la source chaude est en échange thermique avec l'eau du réservoir (10).

17. Procédé de modification de la capacité énergétique d'un réservoir d'eau (10), le procédé étant **caractérisé en ce qu'**il comprend des étapes de :

   - réception de données descriptives d'un état d'un réseau électrique (2) caractéristiques d'un déficit et/ou d'une surabondance, actuel(le) et/ou futur(e), d'énergie d'origine renouvelable au sein dudit réseau électrique (2) ;
   - génération par une sonde de température (20) d'un signal représentatif de la température de l'eau du réservoir (10) ;
   - émission dudit signal par la sonde de température (20) à destination d'un module de contrôle (12) d'un dispositif de chauffage (11) de l'eau du réservoir (10), le dispositif de chauffage (11) comprenant un moyen de chauffage alimenté par le réseau électrique (2) ;
   - interception et modification par un élément de leurre (30) disposé entre la sonde (20) et le module de contrôle (12) dudit signal en fonction desdites données descriptives d'un état du réseau électrique (2) ;
   - contrôle du dispositif de chauffage (11) par le module de contrôle (12) en fonction dudit signal modifié.

18. Procédé selon la revendication 17, dans lequel les données descriptives d'un état dudit réseau électrique (2) sont caractéristiques d'un déficit actuel et/ou d'une surabondance future d'énergie d'origine renouvelable au sein dudit réseau électrique (2), ledit signal étant modifié par l'élément de leurre (30) pour être représentatif d'une température plus élevée que la température réelle de l'eau du réservoir (10), de sorte à diminuer la capacité énergétique du réservoir (10).

19. Procédé selon la revendication 17, dans lequel les données descriptives d'un état dudit réseau électrique (2) sont caractéristiques d'une surabondance actuelle et/ou d'un déficit futur d'énergie d'origine renouvelable au sein dudit réseau électrique (2), ledit signal étant modifié par l'élément de leurre (30) pour être représentatif d'une température plus faible que la température réelle de l'eau du réservoir (10), de sorte à augmenter la capacité énergétique du réservoir (10).

**Patentansprüche**

1. System (1), umfassend:

   - einen Wasser-Vorratsbehälter (10);
   - eine Heizvorrichtung (11) des Wassers des Vorratsbehälters (10), wobei die Vorrichtung (11) ein Heizmittel umfasst, das von einem Stromnetz (2) versorgt wird;
   - eine Temperatursonde (20), die konfiguriert ist, um ein Signal zu senden, das für die Temperatur des Wassers des Vorratsbehälters (10) repräsentativ ist;
   - ein Steuermodul (12) der Heizvorrichtung (11), das in Abhängigkeit von dem von der Sonde (20) gesendeten Signal gesteuert wird;

   wobei das System **dadurch gekennzeichnet ist, dass** es ferner ein Täuschelement (30) umfasst, das zwischen der Sonde (20) und dem Steuermodul (12) angeordnet ist, das konfiguriert ist, um das von der Sonde (20) gesendete Signal derart zu verändern, dass eine energetische Kapazität des Wasser-Vorratsbehälters (10) in Abhängigkeit von beschreibenden Daten eines Zustands des Stromnetzes (2) verändert wird, die für einen Mangel und/oder Überfluss, aktuell und/oder zukünftig, an Energie erneuerbaren Ursprungs innerhalb des Stromnetzes (2) kennzeichnend sind.

2.  System nach Anspruch 1, umfassend ferner ein Gateway (31), welcher die beschreibenden Daten eines Zustands des Stromnetzes (2) von einem Kommunikationsnetz (3) empfängt, wobei das Gateway (31) an das Täuschelement (30) oder an das Steuermodul (12) angeschlossen ist.

3.  System nach einem der vorangehenden Ansprüche, wobei das Steuermodul (12) konfiguriert ist, um die Heizvorrichtung (11) zu aktivieren, wenn das empfangene Signal für eine Temperatur repräsentativ ist, die niedriger als ein erster vorher festgelegter Grenzwert ist.

4.  System nach Anspruch 3, wobei das Täuschelement (30) konfiguriert ist, damit das von dem Steuermodul (12) empfangene Signal für eine Temperatur repräsentativ ist, die höher als die tatsächliche Temperatur des Wassers des Vorratsbehälters (10) ist, wenn die beschreibenden Daten eines Zustands des Stromnetzes (2) für einen aktuellen Mangel und/oder einen zukünftigen Überfluss an Energie erneuerbaren Ursprungs innerhalb des Stromnetzes (2) kennzeichnend sind, so dass die energetische Kapazität des Wasser-Vorratsbehälters (10) gesenkt wird.

5.  System nach einem der vorangehenden Ansprüche, wobei das Steuermodul (12) konfiguriert ist, um die Heizvorrichtung (11) zu deaktivieren, wenn das empfangene Signal für eine Temperatur repräsentativ ist, die höher als ein zweiter vorher festgelegter Grenzwert ist.

6.  System nach Anspruch 5, wobei das Täuschelement (30) konfiguriert ist, damit das von dem Steuermodul (12) empfangene Signal für eine Temperatur repräsentativ ist, die niedriger als die tatsächliche Temperatur des Wassers des Vorratsbehälters (10) ist, wenn die beschreibenden Daten eines Zustands des Stromnetzes (2) für einen aktuellen Überfluss und/oder einen zukünftigen Mangel an Energie erneuerbaren Ursprungs innerhalb des Stromnetzes (2) kennzeichnend sind, so dass die energetische Kapazität des Wasser-Vorratsbehälters (10) erhöht wird.

7.  System nach einem der vorangehenden Ansprüche, wobei die Sonde (20) einen Thermistor (TH) umfasst, wobei das für die Temperatur des Wassers des Vorratsbehälters (10) repräsentative Signal die Spannung an den Klemmen des Thermistors ist.

8.  System nach Anspruch 7, wobei das Täuschelement (30) mindestens einen Widerstand (R1, R2) und mindestens einen Schalter (K1, K2) umfasst.

9.  System nach Anspruch 8, wobei ein erster Widerstand (R1) mit dem Thermistor (TH) in Reihe geschaltet ist, wobei ein erster Schalter (K1) zum ersten Widerstand (R1) parallel geschaltet ist.

10. System nach einem der Ansprüche 8 und 9, wobei ein zweiter Widerstand (R2) und ein zweiter Schalter (K2) auf einem Zweig in Reihe geschaltet sind, der zum Thermistor (TH) parallel geschaltet ist.

11. System nach den Ansprüchen 9 und 10 in Kombination, wobei der Zweig parallel zu der Einheit geschaltet ist, umfassend die Thermistoren (TH), ersten Widerstand (R1) und ersten Schalter (K1).

12. System nach den Ansprüchen 11, 4 und 6 in Kombination, wobei das Täuschelement (30) für eine normale Funktionsweise konfiguriert ist, bei Schließen des ersten Schalters (K1) und bei Öffnen des zweiten Schalters (K2), konfiguriert, damit das von dem Steuermodul (12) empfangene Signal für eine Temperatur repräsentativ ist, die niedriger als die tatsächliche Temperatur des Wassers des Vorratsbehälters (10) ist, bei Öffnen des ersten Schalters (K1) und bei Öffnen des zweiten Schalters (K2), und konfiguriert, damit das von dem Steuermodul (12) empfangene Signal für eine Temperatur repräsentativ ist, die höher als die tatsächliche Temperatur des Wassers des Vorratsbehälters (10) ist, bei Schließen des ersten Schalters (K1) und bei Schließen des zweiten Schalters (K2) .

13. System nach einem der Ansprüche 11 und 12, wobei der erste Widerstand (R1) einen Wert unter 1 k$\Omega$ hat und der zweite Widerstand (R2) einen Wert über 5 k$\Omega$ hat.

14. System nach einem der Ansprüche 1 bis 7, wobei das Täuschelement (30) ein Datenverarbeitungsmodul umfasst, das konfiguriert ist, um das von der Sonde (20) gesendete Signal zu empfangen und in Richtung des Steuermoduls (12) ein Signal zu erzeugen, das für eine Temperatur repräsentativ ist, die sich von der tatsächlichen Temperatur des Wassers des Vorratsbehälters (10) unterscheidet, in Abhängigkeit von den beschreibenden Daten eines Zustands des Stromnetzes (2).

15. System nach einem der vorangehenden Ansprüche, wobei das von dem Stromnetz (2) der Heizvorrichtung (11) versorgte Heizmittel ein Widerstand (R) ist, wobei das System (1) ein Joule-Wassererhitzer ist.

16. System nach einem der Ansprüche 1 bis 14, wobei das von dem Stromnetz (2) der Heizvorrichtung (11) versorgte Heizmittel eine Wärmepumpe ist, deren warme Quelle in thermischem Austausch mit dem Wasser des Vorratsbehälters (10) ist.

17. Verfahren zur Änderung der energetischen Kapazität eines Wasser-Vorratsbehälters (10), wobei das Verfahren **dadurch gekennzeichnet ist, dass** es die folgenden Schritte umfasst:

- Empfangen von beschreibenden Daten eines Zustands eines Stromnetzes (2), die für einen Mangel und/oder einen Überfluss, aktuell und/oder zukünftig, an Energie erneuerbaren Ursprungs innerhalb des Stromnetzes (2) kennzeichnend sind;
- Erzeugen, durch eine Temperatursonde (20), eines für die Temperatur des Wassers des Vorratsbehälters (10) repräsentativen Signals;
- Senden des Signals durch die Temperatursonde (20) in Richtung eines Steuermoduls (12) einer Heizvorrichtung (11) des Wassers des Vorratsbehälters (10), wobei die Heizvorrichtung (11) ein von dem Stromnetz (2) versorgtes Heizmittel umfasst;
- Überwachen und Ändern, durch ein Täuschelement (30), das zwischen der Sonde (20) und dem Steuermodul (12) angeordnet ist, des Signals in Abhängigkeit von den beschreibenden Daten eines Zustands des Stromnetzes (2) ;
- Steuern der Heizvorrichtung (11) durch das Steuermodul (12) in Abhängigkeit von dem geänderten Signal.

18. Verfahren nach Anspruch 17, wobei die beschreibenden Daten eines Zustands des Stromnetzes (2) für einen aktuellen Mangel und/oder einen zukünftigen Überfluss an Energie erneuerbaren Ursprungs innerhalb des Stromnetzes (2) kennzeichnend sind, wobei das Signal von dem Täuschelement (30) verändert wird, um für eine Temperatur repräsentativ zu sein, die höher als die tatsächliche Temperatur des Wassers des Vorratsbehälters (10) ist, so dass die energetische Kapazität des Vorratsbehälters (10) gesenkt wird.

19. Verfahren nach Anspruch 17, wobei die beschreibenden Daten eines Zustands des Stromnetzes (2) für einen aktuellen Überfluss und/oder einen zukünftigen Mangel an Energie erneuerbaren Ursprungs innerhalb des Stromnetzes (2) kennzeichnend sind, wobei das Signal von dem Täuschelement (30) verändert wird, um für eine Temperatur repräsentativ zu sein, die niedriger als die tatsächliche Temperatur des Wassers des Vorratsbehälters (10) ist, so dass die energetische Kapazität des Vorratsbehälters (10) erhöht wird.

**Claims**

1. A system (1) comprising:

- a water tank (10);
- a device for heating (11) the water of the tank (10), the device (11) comprising a heating means powered by an electrical network (2);
- a temperature probe (20) configured to transmit a signal representative of the temperature of the tank (10) water;
- a module for controlling (12) said heating device (11) controlled based on said signal transmitted by the probe (20);

the system being **characterized in that** it further comprises a decoy element (30) disposed between the probe (20) and the control module (12) configured to modify the signal transmitted by the probe (20) so as to modify an energy capacity of the water tank (10), based on data descriptive of a state of said electrical network (2) and characteristic of a current and/or future deficit and/or overabundance of energy from renewable origin within said electrical network (2).

2. The system according to claim 1, further comprising a gateway (31) receiving said data descriptive of a state of the electrical network (2) from a communication network (3), the gateway (31) being connected to said decoy element (30) or to the control module (12).

3. The system according to any of the preceding claims, wherein the control module (12) is configured to activate the heating device (11) when the received signal is representative of a temperature less than a first predefined threshold.

4. The system according to claim 3, wherein the decoy element (30) is configured so that the signal received by the control module (12) is representative of a temperature higher than the actual temperature of the tank (10) water, when the data descriptive of a state of said electricity network (2) are characteristic of a current deficit and/or a future overabundance of energy from renewable origin within said electrical network (2), so as to reduce the energy capacity of the water tank (10).

5. The system according to any of the preceding claims, wherein the control module (12) is configured to deactivate the heating device (11) when the received signal is representative of a temperature greater than a second predefined threshold.

6. The system according to claim 5, wherein the decoy element (30) is configured so that the signal received by the control module (12) is representative of a temperature lower than the actual temperature of the tank (10) water, when the data descriptive of a state of said electrical network (2) are characteristic of a current overabundance and/or a future deficit of energy from renewable origin within said electrical network (2), so as to increase the energy capacity of the water tank (10).

7. System according to any of the preceding claims, wherein the probe (20) comprises a thermistor (TH), the signal representative of the temperature of the tank (10) water being the voltage at the terminals of the thermistor.

8. The system according to claim 7, wherein the decoy element (30) comprises at least one resistor (R1, R2) and at least one switch (K1, K2).

9. The system according to claim 8, wherein a first resistor (R1) is connected in series with the thermistor (TH), a first switch (K1) being mounted in parallel with the first resistor (R1).

10. The system according to any of claims 8 and 9, wherein a second resistor (R2) and a second switch (K2) are mounted in series on a branch mounted in parallel with the thermistor (TH).

11. The system according to claims 9 and 10 in combination, wherein said branch is mounted in parallel with the assembly comprising the thermistors (TH), first resistor (R1), and first switch (K1).

12. The system according to claims 11, 4 and 6 in combination, wherein the decoy element (30) is configured for a normal operation by closing the first switch (K1) and opening the second switch (K2), configured so that the signal received by the control module (12) is representative of a temperature lower than the actual temperature of the tank (10) water by opening the first switch (K1) and opening the second switch (K2), and configured so that the signal received by the control module (12) is representative of a temperature higher than the actual temperature of the water of the tank (10) by closing the first switch (K1) and closing the second switch (K2).

13. The system according to any of claims 11 and 12, wherein the first resistor (R1) has a value less than 1k$\Omega$, and the second resistor (R2) has a value greater than 5k$\Omega$.

14. The system according to any of claims 1 to 7, wherein the decoy element (30) comprises a data processing module configured to receive the signal transmitted by the probe (20) and generate for the control module (12) a signal representative of a temperature different from the actual temperature of the tank (10) water based on said data descriptive of a state of said electrical network (2).

15. The system according to any of the preceding claims, wherein the heating means powered by the electrical network (2) of the heating device (11) is a resistor (R), the system (1) being a joule water heater.

16. The system according to any of claims 1 to 14, wherein the heating means powered by the electrical network (2) of the heating device (11) is a heat pump whose hot source is in heat exchange with the tank (10) water.

**17.** A method for modifying the energy capacity of a water tank (10), the method being **characterized in that** it comprises steps of:

- receiving data descriptive of a state of an electrical network (2) characteristic of a current and/or future deficit and/or overabundance of energy from origin renewable within said electrical network (2);
- generating, by a temperature probe (20), a signal representative of the temperature of the tank (10) water;
- transmitting said signal by the temperature probe (20) for a module for controlling (12) a heating device (11) of the tank (10) water, the heating device (11) comprising a heating means powered by the electrical network (2);
- intercepting and modifying, by a decoy element (30) disposed between the probe (20) and the control module (12), said signal based on said data descriptive of a state of the electrical network (2);
- controlling the heating device (11) by the control module (12) according to said modified signal.

**18.** The method according to claim 17, wherein the data descriptive of a state of said electrical network (2) are characteristic of a current deficit and/or a future overabundance of energy from renewable origin within said electrical network (2), said signal being modified by the decoy element (30) to be representative of a temperature higher than the actual temperature of the tank (10) water, so as to reduce the energy capacity of the tank (10).

**19.** The method according to claim 17, wherein the data descriptive of a state of said electrical network (2) are characteristic of a current overabundance and/or a future deficit of energy from renewable origin within said electrical network (2), said signal being modified by the decoy element (30) to be representative of a temperature smaller than the actual temperature of the tank (10) water, so as to increase the energy capacity of the tank (10).

**FIG. 1**

**FIG. 2**

**FIG. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090188486 A

- US 2013205814 A